# EUROPEAN PATENT APPLICATION

(11) **EP 3 745 085 A1**
(43) Date of publication of application: **02.12.2020**
(21) Application number: 18902390.6
(22) Date of filing: 29.08.2018
(51) Int. Cl.: G01C 21/20, G01C 11/02, G01C 11/04

(54) **MULTI-DEVICE VISUAL NAVIGATION METHOD AND SYSTEM IN VARIABLE SCENE**

(30) Priority: 24.01.2018 CN 201810066735
(71) Applicant: Zhuineng Robotics (Shanghai) Co., Ltd., Shanghai 200333 (CN)
(72) Inventor: LIU, Zhe, Shanghai 200333 (CN)
(74) Representative: Isarpatent
(86) International application number: PCT/CN2018/102972
(87) International publication number: WO 2019/144617

(57) **Abstract**

Disclosed are a multi-device visual navigation method and system in a variable scene. The method comprises: on one hand, by means of multiple devices continuously photographing scene images, acquiring data feature information of the images, and extracting data feature information of a key frame therefrom and sending same to a server end (or a cloud), and on the other hand, the server end (or the cloud) filling in a blank space of a scene with the latest acquired data feature information of the key frame, so as to complete the expansion of navigation data of the scene; alternatively, after the latest acquired data feature information is added, replacing the most dissimilar data feature information in the existing data in a region so as to complete the update of the navigation data of the scene, and finally, a server distributing calibrated and updated data feature information to each terminal device, thereby ensuring the real-time update of the navigation data, and realizing clustered autonomous navigation.

## Description

### Field of invention

The present invention relates to the technical field of robot navigation, in particular to a multi-device visual navigation method and system in variable scene.

### Prior arts

At present, automatic navigation robots have been widely used in warehouse automation, especially goods-to-person systems based on the automatic navigation robots. At present, the positioning methods of more advanced automatic navigation robots in the warehouse mainly include the following:
1. Laser positioning system based on laser reflection
   a) Expensive
   b) The place where the reflector is installed cannot be blocked, and larger space needs be reserved on the walking path during use, which wastes larger space in the warehouse
   c) Affected by temperature
   d) Can only be used indoors.
2. Visual positioning based on indoor scene reconstruction
   a) The accuracy is low, and larger space needs to be reserved on the walking path during use, which wastes larger space in the warehouse
   b) Unable to cope with repeated scenes
   c) Unable to cope with frequently changing scenes. Especially in the field of goods-to-person warehousing, the shelve keeps moving, causing the scene to change constantly
   d) Independent operation between devices, there are deviations in the reconstruction scenes between different devices, and it is impossible to achieve precise positioning and unification of the reconstruction scenes. Therefore, the visual positioning system based on indoor scene reconstruction has only a few devices in operation.
3. Positioning system based on ground identification code
   a) Although the accuracy is high, it depends on the ground markers and is easy to wear
   b) Entering the scene requires a lot of manpower for measuring and laying
   c) Once the equipment greatly deviates from the normal line, it cannot be corrected by the marker.

### Content of the present invention

The purpose of the present invention is to provide a, to solve the above-mentioned problems in the prior arts.

In order to achieve the above-mentioned purpose, the specific solution of the present invention is to provide a multi-device visual navigation method in variable scene, comprising the following steps:
a first device photographs a video sequence of the scene, and obtains a digitized feature information of each frame of the image in the video sequence;
the first device compares according to the digitized feature information, extracts a key frame in the video sequence, and uploads the digitized feature information of the key frame to a second device;
the second device compares and screens the digitized feature information uploaded by the first device, and reorganizes the screened digitized feature information to complete the construction, update, and distribution of the navigation data of the scene.

Further, characterized in that the process of obtaining the digitized feature information comprises:
the first device collects an image of the ground of the scene;
identifying a feature point in the image, and extracting a feature information of the feature point from the feature point;
the feature information of the feature point in the image is formatted and digitized to form the digitized feature information of the image.

Furthermore, the digitized feature information of the image is array data formed by formatting arrangement, and the digitized feature information comprises an image position, a coordinate of the feature point, a direction of the feature point, a size of the feature point, and a description factor of the feature point.

Furthermore, the process of extracting the key frame comprises:
searching and comparing the digitized feature information of the newly obtained image with the digitized feature information of the key frame stored in the database;
based on the comparison result of the newly obtained image and the digitized feature information of the key frame stored in the database, a similarity evaluation value is given;
when the similarity evaluation value is less than a set threshold, the image frame is the key frame.

Furthermore, the digitized feature information is searched and compared through the geometric position of the feature point and the description factor of the feature point, and the geometric position of the feature point is calculated by the position, size and direction of the feature point.

Furthermore, the similarity evaluation value is the number of the feature points whose description factor matches the geometric position in the comparison result of the digitized feature information of the image.

Furthermore, the process of screening and constructing the digitized feature information by the second device comprises:
receiving and storing digitized feature information to form a data set of the digitized feature information;
when the digitized feature information in the data set reaches an upper limit of quantity, the newly received digitized feature information is retained, the remaining digitized feature information is prioritized, and the digitized feature information with the lowest priority is deleted;
performing calibration and closed-loop detection on all digitized feature information in the data set to construct the navigation data of the scene.

Furthermore, setting the upper limit of quantity of the digitized feature information in the data set, and the upper limit of quantity is the upper limit of quantity of the digitized feature information at each image position.

Furthermore, the prioritization of the digitized feature information comprises: comparing the newly received digitized feature information with all the digitized feature information at its image position and its neighboring range in pairwise similarity;
through the spatial transformation model, detecting the number of the feature points that the position of the feature point, the direction of the feature point, the size of the feature point, and feature description factor between the digitized feature information are matching;
prioritizing the digitized feature information through the number of matching feature points.

Furthermore, the spatial transformation model is generated by comparing the position of the feature point, the direction of the feature point, the size of the feature point, and the description factor of the feature point of the digitized feature information in the data set.

On the other aspect, the present invention further provides a multi-device visual navigation system in variable scene, comprising:
a first device, the first device is used for photographing a video sequence of the scene, and obtaining a digitized feature information of each frame of the image in the video sequence, and comparing according to the digitized feature information, extracting a key frame in the video sequence, and uploading the digitized feature information of the key frame to a second device;
a second device, is used for comparing and screening the digitized feature information uploaded by the first device, and reorganizing the screened digitized feature information to complete the construction, update, and distribution of the navigation data of the scene.

Furthermore, the first device is an autonomous navigation device or an autonomous navigation device configured on an AGV truck, and the second device is a server-side that is communicatively connected with the first device.

Furthermore, the number ratio of the autonomous navigation device to the server-side is n:m, wherein n is a natural number greater than 1, and m is a natural number greater than or equal to 1.

Furthermore, the first device comprises:
a video collecting unit, used for collecting an image frame of the ground of the scene; an image information identifying unit, used for identifying a feature point in the image frame, and forming a digitized feature information of the image frame;
a key frame extracting unit, the key frame searches and compares the obtained digitized feature information of the image frame with the previously extracted digitized feature information of the key frame to extract the key frame.
a communicating unit, the communicating unit is used for sending the digitized feature information of the key frame extracted by the key frame extracting unit to the second device.

Furthermore, the second device comprises:
a digitized feature information screening unit, the digitized feature information screening unit compares the newly obtained digitized feature information with the previously obtained digitized feature information for similarity, and prioritizes it according to the comparison results during the screening,
a navigation data constructing unit, the navigation data constructing unit constructs the navigation data of the scene according to the digitized feature information.

Compared with the prior art, the present invention has the following advantages and beneficial effects:
A multi-device visual navigation method and system in variable scene of the present invention, on one hand, continuously photographing ground images of the scene through multiple devices, extracting feature information of the ground images, and image digitized feature information formed based on the feature information, and sending the formatted data of the key frame to server-side (or cloud) through the network, so that only the formatted data needs to be sent, thereby improving the real-time performance of network transmission, and saving network bandwidth and resources, and it avoids the problems of recognition accuracy and reliability in variable scene, by photographing ground video, on the other hand, the server (or the cloud) based on the digitized feature information of the key frame is compared, calibrated and screened with the previously obtained digitized feature information. The newly obtained digitized feature information fills the blank space of the scene, to complete the expansion of the navigation data of the scene; or after adding the newly obtained digitized feature information, it replaces the most dissimilar digitized feature information in the existing data in the area, to complete the update of the navigation data of the scene. Finally, the server sends the digitized feature information after being calibrated and updated to each terminal device. This ensures the real-time update of the navigation data, and can be distributed to multiple devices to achieve clustered autonomous navigation.

### Brief description of the drawings

In order to explain embodiments of the present invention or the technical solutions in the prior art more clearly, the following will briefly introduce the drawings that need to be used in the description of the embodiments or the prior art, obviously, the drawings in the following description are only some embodiments of the present invention, for those of ordinary skilled in the art, other drawings can be obtained based on these drawings without creative labor.
- Fig. 1: is a method flowchart of a multi-device visual navigation method in variable scene of the present invention;
- Fig.2: is a method flowchart for obtaining digitized feature information of the present invention;
- Fig.3: is a method flowchart for extracting key frame of the present invention.

### Detailed description of the preferred embodiment

The technical solutions in the embodiments of the present invention will be clearly and completely described below in conjunction with the drawings in the embodiments of the present invention, obviously, the described embodiments are only a part of the embodiments of the present invention, not all of the embodiments. Based on the embodiments of the present invention, all other embodiments obtained by those of ordinary skilled in the art without creative labor shall fall within the protection scope of the present invention.

The present invention is to provide a multi-device visual navigation method and system in variable scene, which is mainly applied in variable and complicated scenes such as warehouse automation. The warehouse automation environment mainly comprises mobile shelve and automatic navigation robot, wherein the bottom of the mobile shelve has a space for the automatic navigation robot to enter, the automatic navigation robot can enter the bottom of the mobile shelve from four directions, and lift the mobile shelve and transport it to work area or storage area. In the actual transportation process, a large number of mobile shelves are transported back and forth between the work area and the storage area by the automatic navigation robot, forming a complex scene that changes in real time. In such a variable and complex scene, the automatic navigation method based on SLAM (Synchronous Location and Map Construction) technology that recognizes by capturing scene images cannot recognize the continuous movement of the shelves, nor can it recognize the repeated arrangement of the shelves. However, the identification method based on the ground identification code also has the problem that a lot of manpower and financial resources are needed to lay the identification code in the scene, and when the automatic navigation robot deviates from the motion track, the route correction and relocation cannot be performed through the identification code.

Based on the above-mentioned technical problems, the present invention provides a multi-device visual navigation method in variable scene, which abandons the way of single-machine scene recognition or identification code positioning, and adopts a distributed method, multiple first devices at the front end obtain the scene ground image (or be called ground pattern image), in the background (for example, server or cloud) through the analysis, screening and optimization of the ground image information uploaded by multiple first devices to complete the scene construction based on the scene ground image (or be called ground pattern image). Each first device obtains, uploads, and updates the scene ground image in real time during this work process, that can achieve positioning and navigation in variable and repetitive scene.

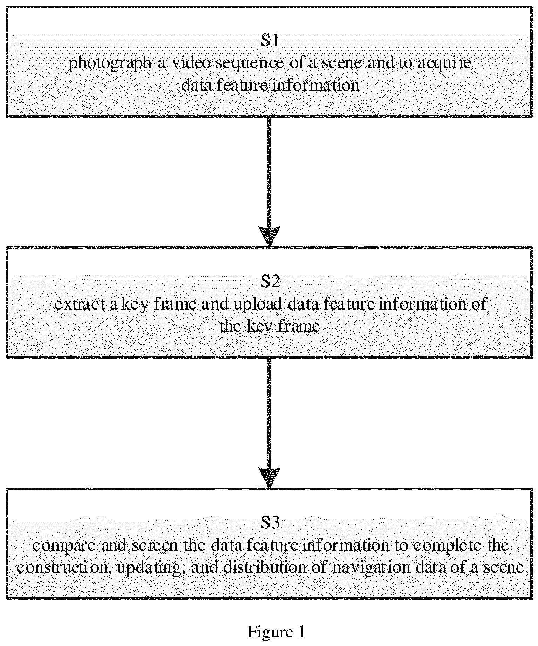

The following describes in detail a multi-device visual navigation method in variable scene disclosed in an embodiment of the present invention with reference to Fig.1, and Fig.1 schematically shows a flowchart of the multi-device visual navigation method in variable scene disclosed according to this embodiment.

As shown in Fig.1, this embodiment provides a multi-device visual navigation method in variable scene, and it comprises the following steps:
Step S1, a first device photographs a video sequence of the scene, and obtains a digitized feature information of each frame of the image in the video sequence.

Wherein, the first device can be an AGV robot, also can be an autonomous navigation device configured on an AGV robot or other mobile devices. The first device photographs ground images through various image acquisition devices such as depth cameras, stereo cameras, monocular/multi-lens cameras or ordinary cameras. Before the first photographing, the movement track of the first device is set by the dispatch server. The dispatch server stores basic information such as the shape, size, and layout of the scene, and the basic information of the scene is pre-recorded in the dispatch server, its purpose is to ensure that the motion track of each first device during the first photographing can cover all the scenes as much as possible.

Preferably, this embodiment takes an ordinary camera as an example, the camera can be installed on the AGV robot to form a certain photographing angle with the ground, and it is not limited to only vertically photographing ground images at an angle of 90°. The first device moves in the scene along the motion track, and the camera instantly photographs the ground of the scene to form a video sequence composed of consecutive multiple image frames. While obtaining the video sequence, the first device obtains the digitized feature information of each frame of the image in the video sequence.

Preferably, the multiple image frames in the video sequence do not have to be all the image frames in the video sequence, but can also be only some of the image frames; on the other hand, the multiple image frames can be continuous multi-frame images or can also be a discrete multi-frame image extracted from a video sequence at a predetermined frame interval.

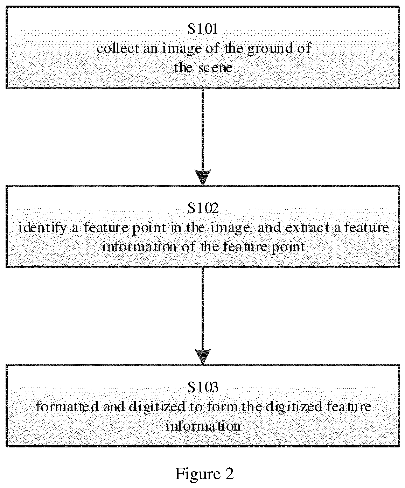

Preferably, the digitized feature information is a group of formatted array data containing the image digitized feature information. As shown in Fig.2, the process of obtaining the digitized feature information comprises:
S101, the first device collects an image of the ground of the scene;
S102, identifying a feature point in the image, and extracting a feature information of the feature point from the feature point;
S103, the feature information of the feature point in the image is formatted and digitized to form the digitized feature information of the image.

Wherein, the recognition of feature point can be recognized by a feature point detection method commonly used in the art, such as FAST algorithm, ORB algorithm, or SURF algorithm. After the feature point is identified, the feature information of the feature point can be obtained, and then the image can be described by the feature information of the feature point.

Preferably, after obtaining the feature information of the feature point, the feature information is formatted and digitized to form the feature information of the image. Compared with the prior art that the key frame is obtained by comparing the image acquisition method, it reduces the bandwidth occupancy rate, accelerates the transmission speed and calculation speed, and thereby ensures the real-time performance of recognition.

Exemplarily, the digitized feature information of the ground image comprises an image position, a coordinate of the feature point, a direction of the feature point, a size of the feature point, and a description factor of the feature point. As shown in the following table:

**Table 1:**

| | |
|---|---|
| Data header (fixed format) | |
| Device name | |
| Photographing time | Image position |
| Image number | |
| Feature information of feature point | |
| Data tail (fixed format) | |

As shown in table 1, this is a schematic diagram of the digitized feature information of the preferred embodiment of the present invention, wherein, the data header, such as the message header of a TCP message, may comprise the port number, sequence number, acknowledgement number, and data offset of source port and destination port, etc, and name of the first device, photographing time, image position, and feature information of feature point and so on are encapsulated in the data part of the TCP message. The feature information of the feature point can have multiple groups, and each group of feature point information comprises the coordinate of the feature point, the direction of the feature point, the size of the feature point, and the description factor of the feature point.

Preferably, the image position can be obtained in the following two ways:
1. The photographed image p is performed feature point matching with the previously saved adjacent key frame k (the same operation can be performed with multiple key frames), and the rotation and translation matrix between p and k is obtained by removing the wrong matching and constructing a space model, superimpose the position information of k on the position information of p relative to k, and finally the position information of p is obtained.
2. Calculating the position information of the image by combining the motion track of the first device with one or more of encoder, position sensor, and distance measuring device.

Preferably, the coordinate of the feature point is the coordinate position of the feature point in the image. The size and direction of the feature point are the feature point size and two-dimensional vector defined by the feature point detection method. The description factor of the feature point is a tag number, and the classification number is the description factor classification number that is closest to the description of the feature point in the pre-classified description factor library.

Step S2, the first device compares according to the digitized feature information, extracts a key frame in the video sequence, and uploads the digitized feature information of the key frame to a second device.

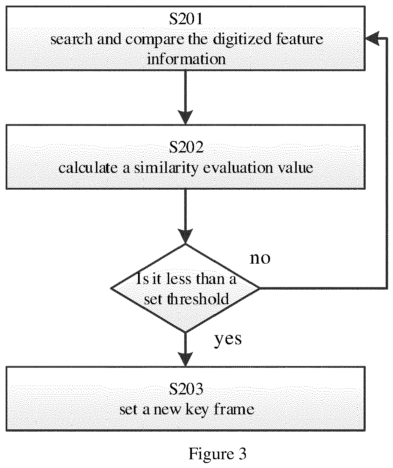

As shown in Fig.3, the process of extracting the key frame comprises the following steps:
S201, searching and comparing the digitized feature information of the newly obtained image with the digitized feature information of the key frame stored in the database;
S202, based on the comparison result of the newly obtained image and the digitized feature information of the key frame stored in the database, a similarity evaluation value is given;
S203, when the similarity evaluation value is less than a set threshold, the image frame is the key frame.

Preferably, the preferred embodiment of the present invention compares the feature points in the newly obtained image and the key frame stored in the database according to the digitized feature information, to obtain the number of matching feature points between the two. In the process of feature point comparison, firstly, a space conversion model is obtained through feature point matching and model fitting method, then the space conversion model converts the feature point coordinate, feature point direction, and feature point size of the two, to obtain geometry position of the feature point, when the geometric positions of the two are close, whether the description factors of the feature points are consistent, and when the geometric positions and descriptions of the feature points match, it can be judged that the newly obtained image and the compared key frame have the same feature points.

Preferably, the similarity evaluation value is the number of the same feature points in the newly obtained image and the comparison key frame. When the similarity evaluation value is less than a set threshold, it can be judged that the newly obtained image has a significant change compared with the key frame stored in the database, the image is set as the key frame, and the first device immediately uploads the digitized feature information of the key frame to the second device.

Step S3, the second device compares and screens the digitized feature information uploaded by the first device, and reorganizes the screened digitized feature information to complete the construction, update of the navigation data of the scene and distribute it to the first device to achieve navigation.

Preferably, firstly, the second device receives and stores the digitized feature information to form a data set of the digitized feature information. When the digitized feature information in the data set reaches an upper limit of quantity, the newly received digitized feature information is retained, the remaining digitized feature information is prioritized, and the digitized feature information with the lowest priority is deleted. Performing calibration and closed-loop detection on all digitized feature information in the data set to construct the navigation data of the scene.

Wherein, the upper limit of quantity of digitized feature information is preset, and it is determined according to the calculation and storage performance of the system. The upper limit of quantity is the upper limit of quantity of digitized feature information on each spatial region.

Preferably, the prioritization of the digitized feature information comprises: comparing the newly received digitized feature information with all the digitized feature information at its image position and its neighboring range in pairwise similarity;
through the spatial transformation model, detecting the number of feature points that the position of the feature point, the direction of the feature point, and the size of the feature point between the digitized feature information are matching;
prioritizing the digitized feature information through the number of matching feature points.

Furthermore, the spatial transformation model is generated by comparing the position of the feature point, the direction of the feature point, the size of the feature point, and the description factor of the feature point of the digitized feature information in the data set.

On the other hand, the present invention further provides a multi-device visual navigation system in variable scene, comprises:
a first device, the first device is used for photographing a video sequence of the scene, and obtaining a digitized feature information of each frame of the image in the video sequence, and comparing according to the digitized feature information, extracting a key frame in the video sequence, and uploading the digitized feature information of the key frame to a second device;
a second device, is used for comparing and screening the digitized feature information uploaded by the first device, and reorganizing the screened digitized feature information to complete the construction, update, and distribution of the navigation data of the scene.

Furthermore, the first device is an autonomous navigation device or an autonomous navigation device configured on an AGV truck, and the second device is a server-side that is communicatively connected with the first device.

Furthermore, the number ratio of the autonomous navigation device to the server is n:m, wherein n is a natural number greater than 1, and m is a natural number greater than or equal to 1.

Furthermore, the first device comprises:
a video collecting unit, used for collecting an image frame of the ground of the scene; an image information identifying unit, used for identifying a feature point in the image frame, and forming a digitized feature information of the image frame;
a key frame extracting unit, the key frame searches and compares the obtained digitized feature information of the image frame with the previously extracted digitized feature information of the key frame to extract the key frame.
a communicating unit, the communicating unit is used for sending the digitized feature information of the key frame extracted by the key frame extracting unit to the second device.

Furthermore, the second device comprises:
a digitized feature information screening unit, the digitized feature information screening unit compares the newly obtained digitized feature information with the previously obtained digitized feature information for similarity, and prioritizes it according to the comparison results during the screening,
a navigation data constructing unit, the navigation data constructing unit constructs the navigation data of the scene according to the digitized feature information.

The above descriptions are only preferred embodiments of the present invention and are not intended to limit the present invention, any modification, equivalent replacement, improvement, etc. made within the spirit and principle of the present invention shall be included in the protection scope of the present invention.

## Claims

1. A multi-device visual navigation method in variable scene, wherein it comprises the following steps:
a first device photographs a video sequence of the scene, and obtains a digitized feature information of each frame of the image in the video sequence;
the first device compares according to the digitized feature information, extracts a key frame in the video sequence, and uploads the digitized feature information of the key frame to a second device;
the second device compares and screens the digitized feature information uploaded by the first device, and reorganizes the screened digitized feature information to complete the construction, update of the navigation data of the scene and distribute it to the first device to achieve navigation.

2. The multi-device visual navigation method in variable scene according to claim 1, wherein the process of obtaining the digitized feature information comprises:
the first device collects an image of the ground of the scene;
identifying a feature point in the image, and extracting a feature information of the feature point from the feature point;
the feature information of the feature point in the image is formatted and digitized to form the digitized feature information of the image.

3. The multi-device visual navigation method in variable scene according to claim 2, wherein the digitized feature information of the image is array data formed by formatting arrangement, and the digitized feature information comprises an image position, a coordinate of the feature point, a direction of the feature point, a size of the feature point, and a description factor of the feature point.

4. The multi-device visual navigation method in variable scene according to claim 3, wherein the process of extracting the key frame comprises:
searching and comparing the digitized feature information of the newly obtained image with the digitized feature information of the key frame stored in the database;
based on the comparison result of the newly obtained image and the digitized feature information of the key frame stored in the database, a similarity evaluation value is given;
when the similarity evaluation value is less than a set threshold, the image frame is the key frame.

5. The multi-device visual navigation method in variable scene according to claim 4, wherein the digitized feature information is searched and compared through the geometric position of the feature point and the description factor of the feature point, and the geometric position of the feature point is calculated by the position, size and direction of the feature point.

6. The multi-device visual navigation method in variable scene according to claim 5, wherein the similarity evaluation value is the number of feature points whose description factor matches the geometric position in the comparison result of the digitized feature information of the image.

7. The multi-device visual navigation method in variable scene according to any one of claim 1 to 6, wherein the process of screening and constructing the digitized feature information by the second device comprises:
receiving and storing digitized feature information to form a data set of the digitized feature information;
when the digitized feature information in the data set reaches an upper limit of quantity, the newly received digitized feature information is retained, the remaining digitized feature information is prioritized, and the digitized feature information with the lowest priority is deleted;
performing calibration and closed-loop detection on all digitized feature information in the data set to construct the navigation data of the scene.

8. The multi-device visual navigation method in variable scene according to claim 7, wherein it set the upper limit of quantity of digitized feature information in the data set, and the upper limit of quantity is the upper limit of quantity of digitized feature information at each image position.

9. The multi-device visual navigation method in variable scene according to claim 8, wherein the prioritization of the digitized feature information comprises:
comparing the newly received digitized feature information with all the digitized feature information at its image position and its neighboring range in pairwise similarity;
through the spatial transformation model, detecting the number of feature points that the position of the feature point, the direction of the feature point, and the size of the feature point between the digitized feature information are matching;
prioritizing the digitized feature information through the number of matching feature points.

10. The multi-device visual navigation method in variable scene according to claim 9, wherein the spatial transformation model is generated by comparing the position of the feature point, the direction of the feature point, the size of the feature point, and the description factor of the feature point of the digitized feature information in the data set.

11. A multi-device visual navigation system in variable scene, wherein it comprises:
a first device, the first device is used for shooting a video sequence of the scene, and obtaining a digitized feature information of each frame of the image in the video sequence, and comparing according to the digitized feature information, extracting a key frame in the video sequence, and uploading the digitized feature information of the key frame to a second device;
a second device, used for comparing and screening the digitized feature information uploaded by the first device, and reorganizing the screened digitized feature information to complete the construction, update, and distribution of the navigation data of the scene.

12. The multi-device visual navigation system in variable scene according to claim 11, wherein the first device is an autonomous navigation device or an autonomous navigation device configured on an AGV truck, and the second device is a server-side that is communicatively connected with the first device.

13. The multi-device visual navigation system in variable scene according to claim 12, wherein the number ratio of the autonomous navigation device to the server is n:m, wherein n is a natural number greater than 1, and m is a natural number greater than or equal to 1.

14. The multi-device visual navigation system in variable scene according to claim 12, wherein the first device comprises:
a video collecting unit, used for collecting an image frame of the ground of the scene;
an image information identifying unit, used for identifying a feature point in the image frame, and forming a digitized feature information of the image frame;
a key frame extracting unit, the key frame searches and compares the obtained digitized feature information of the image frame with the previously extracted digitized feature information of the key frame to extract the key frame.
a communicating unit, the communicating unit is used for sending the digitized feature information of the key frame extracted by the key frame extracting unit to the second device.

15. The multi-device visual navigation system in variable scene according to claim 12, wherein the second device comprises:
a digitized feature information screening unit, the digitized feature information screening unit compares the newly obtained digitized feature information with the previously obtained digitized feature information for similarity, and prioritizes it according to the comparison results during the screening,
a navigation data constructing unit, the navigation data constructing unit constructs the navigation data of the scene according to the digitized feature information.
